# EUROPEAN PATENT APPLICATION

(11) **EP 1 253 757 A1**
(43) Date of publication of application: **30.10.2002**
(21) Application number: 01303680.1
(22) Date of filing: 23.04.2001
(51) Int. Cl.: H04L 27/20

(54) **Phase shift keying (PSK) modulator capable of reducing the peak to average power ratio**

(71) Applicant: LUCENT TECHNOLOGIES INC., Murray Hill, New Jersey 07974-0636 (US)
(72) Inventor: Fischer, Georg Dr., 90419 Nuremberg (DE); Ritter, Kai Uwe, 91154 Roth, Bavaria (DE)
(74) Representative: Sarup, David Alexander

(57) **Abstract**

An apparatus for transmitting multistage phase shift keying signals comprising a symbol stream, interpolation and pulse shaping means (4), and digital-to-analog converting means (5) for providing an analog base band transmit signal. A displacing means (3) for producing displaced symbols from the symbol stream is arranged at the input of the interpolation and pulse shaping means (4) and includes detecting means (14 ... 17) for detecting predetermined symbol sequences in the symbol stream. If such symbol sequences are detected, displaced symbols (S3', S3") are produced with a view to avoid peak power at the analog base band transmit signal or to avoid crossing near zero power.

## Description

### Field of the Invention

The invention relates to an apparatus for predistoring phase shift keying signals to be transmitted, and particularly to apparatus for transmitting multistage phase shift keying signals comprising power amplifiers for linear modulation, the crest factor thereof has to be reduced.

The invention is particularly applicable in 8-PSK EDGE systems (PSK = Phase Shift Keying; 8 = Eight Locations; EDGE = Enhanced Data Rates Through GSM Evolution).

### Background of the Invention

Phase shift keying (PSK) may exist in several stages, for example in eight stages (8-PSK). In transmitting stations, power amplifiers for linear modulation are provided, the peak output power thereof should be reduced to reduce the output power requirments of the power amplifier. Normally, the crest factor (peak to average power ratio) associated with 8-PSK for EDGE is around 3 dB, which is moderate. The peak output power is reduced to relax the linearity requirement of the power amplifier

In transmission systems, predistortion of the transmitting signals is often made and for that purpose the behavior of the power amplifier has to be known for deriving an inverse curve which is to be fed to the predistortion means. Also feed forward techniques are known which are based on the superposition of a main amplified signal with a correction signal. Finally, polar modulation can be applied where the supply voltage to the power amplifier has to be modulated.

Further problems are the changes in parameter of the device due to changing temperature and aging effects. To compensate for these effects, the complexity of the transmit circuitry is even augmented. If the parameters are not set properly, the distortion introduced by the predistorter may make things worse at the receiver.

### Summary of the Invention

It is an object of the present invention to provide a transmitting apparatus for multistage phase shift keying signals wherein the crest factor is reduced.

Another object of the invention is to provide a transmitting apparatus for 8-PSK used for EDGE.

The invention is defined in claim 1.

With invention, a transmitting apparatus is provided which, instead of using a predistorter arranged at the input side of the dual D/A converter, uses a displacer for displacing symbols which are delivered to the input of the interpolation impulse shaping means in the transmitting apparatus. The displacer includes means for detecting one or a plurality of predetermined sequences of symbols which are termed "symbol sequence" in this application. When such symbol sequence occur, the displacer makes some displacement of at least one symbol in the symbol sequence. The displacement is such that the power amplifier is operated with a lower crest factor.

### Brief Description of the Drawings

- Fig. 1: is a block diagram of a transmitting apparatus according to invention,
- Fig. 2: is a block diagram of a displacer,
- Fig. 3: is a symbol constellation diagram, and
- Fig. 4: is another symbol constellation diagram.

### Description of the Embodiments

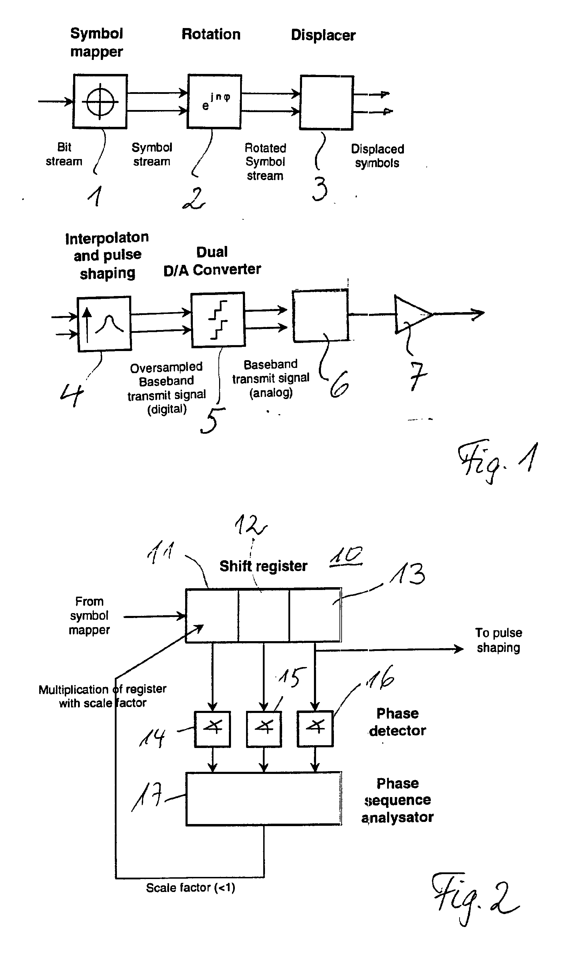

Fig. 1 shows a block diagram with a symbol mapper 1, a rotating means 2, a displacer 3, interpolation and pulse shaping means 4, and a dual D/A converter 5. A bit stream is delivered to the symbol mapper 1 which forms symbols from the bit stream, for example, 3 bits in each symbol for an 8-PSK signal. The output of the symbol mapper 1 is a symbol stream delivered to the rotation means 2, which rotates the symbol sequence. The displacer 3 analyses the symbol sequence and, as the case is, displaces some of the symbols as will be explained below. The undisplaced and displaced symbols undergo an interpolation and pulse shaping to form a digital base band transmit signal which is converted by the D/A converter 5 into an analogue base band transmit signal for being upconverted in an upconverter 6 and amplified in a power amplifier 7, the operation of which is to be influenced by the displacer 3, so that peak power at the transmit signal is reduced.

Fig. 2 shows a displacer for 8-PSK signals. There is a shift register 10 having stages 11, 12, 13, a series of phase detectors 14, 15, 16, and a phase sequence analysator 17. The symbol stream from the symbol mapper 1 is delivered to the shift register 10, that is, the symbols in the stream are shifted from stage to stage and are stored temporarily in the stages. Each stage 11, 12, 13 is connected to a respective phase detector 14, 15, 16 for detecting the phase value of the respective symbol stored in the stage to which the phase detector is connected. The phases detected form a sequence, and the phase sequence analysator 17 analyses whether or not the detected sequence belongs to a predetermined symbol sequence. If such sequence is detected, the shift register 10 is multiplied with a scale factor signal including respective factors for each stage 11, 12 or 13. The scale factors for the several stages of the shift register may differ. In a preferred embodiment, the scale factor for the first stage 11 in the shift register is smaller than unity, for example 0.8, whereas the factor for the further stages is 1.0 .

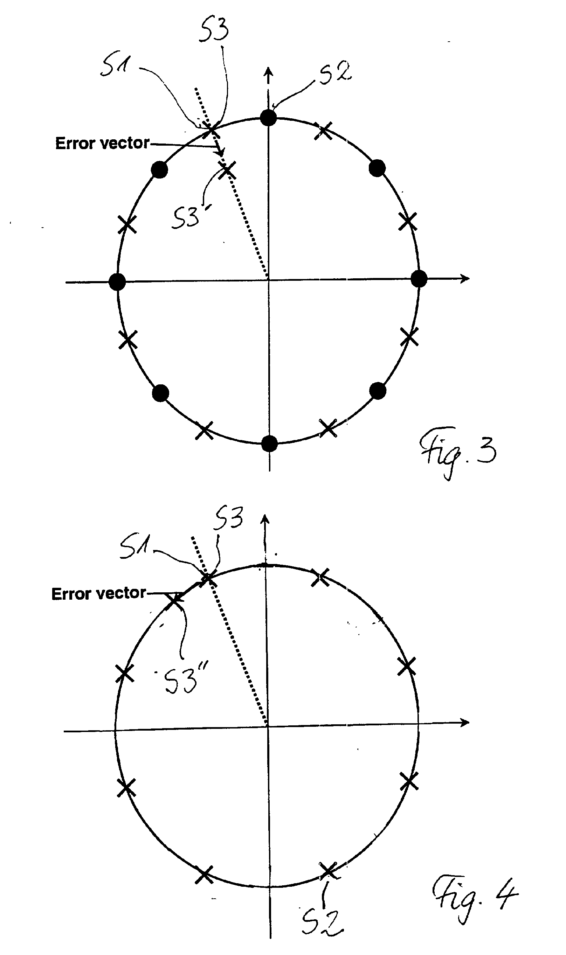

Fig. 3 shows a symbol sequence wherein three symbols or phase values are close to one another and marked at S1, S2 and S3. The filled bullets reflect the symbol locations at even time steps (0, 2, 4, 6, ...) whereas the crossings reflect the symbol locations at odd time steps (1, 3, 5, ...). When the symbols S1, S2, S3 are located quite close to each other, the shaping filter 4 will settle to its maximum amplitude. This implies that the RF transmit signal gets near peak power. By displacing the symbol S3 to S3', peak power can be avoided on the expense of a peak EVM error for S3' of say 20 per cent. This is done by multiplying with 0.8 so that symbol S3 is displaced toward the center of the symbol plane as shown at S3'. Quantitatively an error with an error vector magnitude (EVM) of 20 per cent occurs. However, such error is allowed in the specification for GSM/EDGE. This increased EVM does not generally produce an increased root mean square RMS/EVM value. Furthermore, it is to be considered that the symbol sequence indicated in Fig. 3 occurs very rarely, so that the RMS EVM value does not raise much, that is, the 95 percentile specification will be met in general.

Fig. 4 shows the symbol sequences of symbols S1, S2, S3, where S3 is close to S1. Such a symbol sequence will produce a small amplitude after the pulse shaping filter 4. In such symbol sequences the symbol S3 can be shifted to S3" with the effect that the average power level of the signal is increased. This decreases the peak to minimum power which is advantageous for some types of power amplifiers. As shown, in this symbol sequence symbols S1, S3 on the one hand, and S2 on the other hand are near opposite to each other on the phase circle.

As indicated, the algorithm for displacement of the symbols could also scale the symbol in the second or next stage in the shift register with a factor which is not the same as the factor for the first stage 11 and normally would be lower than the factor of the first stage. It is considered that the basic algorithm is tailored to the specific needs of the transmitting apparatus with respect to peak EVM, RMS EVM and the 95 percentile EVM.

A rotated 8-PSK can also be interpreted as an offset 8-PSK.

## Claims

1. An apparatus for transmitting multistage phase shift keying signals comprising
bit stream supplying means,
symbol mapper means (1) for converting the bit stream in a symbol stream,
interpolation and pulse shaping means (4), and
digital-to-analog converting means (5) for converting a digital base band transmit signal into an analog base band transmit signal,
**characterized in that**
displacing means (3) for producing displaced symbols (S3', S3") from the symbol stream is arranged at the input of the interpolation and pulse shaping means (4), the displacing means (3) including detecting means (14 ... 17) for detecting predetermined symbol sequences in the symbol stream, the detecting means, if detecting such symbol sequence, producing said displaced symbols (S3', S3").

2. The apparatus according to claim 1
wherein said displacing means (3) include
a shift register (10),
a number of phase detectors (14, 15, 16) and
a phase sequence analysator (17),
said shift register (10) having a number of stages (11, 12, 13), each for temporarily storing a symbol in the symbol stream, each stage being connected to a respective one of said phase detectors (14, 15, 16);
said phase detectors (14, 15, 16) detecting the signal phase of the symbol stored in the respective stage (11, 12, 13) to which the phase detector is connected,
said phase sequence analysator (17) analyzing the phase sequence of the symbols temporarily stored so as to detect said predetermined sequence.

3. The apparatus according to claim 2
wherein said phase sequence analysator (17) outputs a scale factor signal representing a number of factors which are fed to said shift register stages (11, 12, 13) for multiplying the values in the stages with the respective factor of the scale factor signal.

4. The apparatus according to claim 3
wherein the scale factor signal represents only one factor for being fed to the first stage (11) of the shift register (10), said factor being less than one.

5. The apparatus according to claim 2
wherein said phase sequence analysator (17) outputs a scaling phase signal representing a number of phases which are fed to said shift register stages (11, 12, 13) for shifting the phase values in the stages by the respective phase value of the scale phase signal.

6. The apparatus according to claim 5
wherein the scale phase signal represents only one scaling phase for being fed to the first stage (11) in the shift register (10), said scale phase being less than the angle between neighboring symbol locations.

7. The apparatus according to one of the claims 2 through 6
wherein the number of the stages (11, 12, 13) of the shift register (10) is three.

8. The apparatus according to one of claims 1 through 7
wherein rotation means (2) for providing a rotated symbol stream is provided for being fed to said interpolation and pulse shaping means (4).

9. The apparatus according to one of claims 1 through 8
wherein said phase shift keying is for eight steps (8-PSK).
